# EUROPEAN PATENT APPLICATION

(11) **EP 3 904 037 A1**
(43) Date of publication of application: **03.11.2021**
(21) Application number: 20172029.9
(22) Date of filing: 29.04.2020
(51) Int. Cl.: B29C 45/00, B29C 45/76, B29C 33/38, B29C 33/00

(54) **MANIPULATION OF WARPAGE AND/OR STIFFNESS IN INJECTION-MOULDED POLYMER PRODUCTS**

(71) Applicant: Borealis AG, 1220 Vienna (AT)
(72) Inventor: Penz, Wolfgang, 4021 Linz (AT); Herbst, Harald, 4021 Linz (AT); Gastl, Simon, 4021 Linz (AT)
(74) Representative: Maiwald Patent- und Rechtsanwaltsgesellschaft mbH

(57) **Abstract**

A method for selectively manipulating warpage and/or stiffness of an injection-moulded polymer plastic product 100 having a predetermined shape. The method comprises the steps of: (a) defining a mould 1 having a cavity, the cavity defining the shape of the product 100; (b) determining a first position of a first nozzle opening 10 in the mould 1, the first nozzle opening 10 extending into the cavity of the mould 1; (c) simulating a filling process of the mould 1 with a melt of the polymer plastic being injected through the first nozzle opening 10; (d) obtaining a simulated image of the shape of the polymer plastic product 100; (e) determining an area of warpage and/or stiffness 50 of the plastic product 100, the area of stiffness having a stiffness value below a threshold stiffness value; (f) determining a second position of a second nozzle opening 20 in the mould 1, the second nozzle opening 20 extending into the cavity of the mould 1 and being different to the first nozzle opening 10, wherein the second position is determined such that an amount of warpage in the area of warpage 50 is reduced and/or the stiffness value in the area of stiffness is increased above the threshold stiffness value.

## Description

The present invention relates to a method for selectively reducing warpage of an injection-moulded polymer plastic product.

Injection-moulded polymer plastic products enjoy great popularity. Depending on the type of polymer used in the injection moulding process, they are lightweight, cost-efficient to manufacture, compatible to various types of other products, such as foodstuff, to some extent chemically and temperature-resistant, resistant to UV-light, water-tight, just to name a few. Injection-moulded polymer plastic products are nowadays widely used in almost every industry, and the most commonly used polymers for injection moulding can be categorized into amorphous polymers, such as polystyrene, polycarbonate, ABS, and semi-crystalline polymers, such as polypropylene.

One known problem resulting from the injection moulding process of amorphous or semi-crystalline polymers is non-uniform shrinkage upon cooling of the polymer melt which effectively results in warpage of the final product. The cause of non-uniform shrinkage is multi-facetted, and it is difficult to allocate a product's warpage to only one cause. However, all these causes are due to the molecular structure of the polymers. It is the molecular structure which is different in amorphous and semi-crystalline polymers, and which explains why amorphous and semi-crystalline polymers follow different shrinkage regimes.

Amorphous polymers have a random and entangled molecular orientation, much like a bowl of spaghetti. With increasing temperature, the interaction between the molecules becomes weaker, as a result of which the distance between neighbouring molecules becomes larger. During injection moulding of amorphous polymers, shear forces cause the molecules to align to the direction of flow. When the polymer stops flowing, the molecules relax and position randomly. Upon cooling, the distance between the molecules reduces until the temperature drops below the freezing temperature at which point the molecules are no longer able to move. Due to the relaxation effect in the direction of flow being greater than perpendicular thereto, the polymer product shrinks more in the direction of flow.

In contrast thereto, semi-crystalline materials have regions of highly ordered, tightly bundled molecular structures. When the temperature rises above the melting temperature, the crystalline structure disappears and the molecules align to the direction of flow. Upon cooling, however, the molecules do not relax, but rather maintain their orientation in the direction of flow and begin to recrystallize, resulting in significantly higher shrinkage rates in the direction perpendicular to the flow.

Glass fibres are added to the polymer material in order to increase strength of the injection-moulded product. These glass fibres do not expand or contract with temperature, and so glass fibre-filled polymer products typical exhibit reduced shrinkage in the direction of the glass fibre orientation.

Conventionally, additional measures can be taken to counteract warpage of an injection-moulded polymer plastic product, such as increasing the wall thickness in certain areas of the injection-moulded product, incorporating reinforcing ribs and fins, changing the geometry of the injection-moulded product, increasing the rate of cooling of the polymer melt inside the mould by incorporating certain metal alloys into the mould. All these measures are rather cumbersome because they result in heavier injection-moulded products, require larger-volume moulds, and prolong the injection moulding process. In other words, they result in higher manufacturing costs.

As already mentioned above, there is not only one reason why warpage occurs in injection-moulded polymer plastic products, and so simulation tools have been developed which help engineers to visualize how much shrinkage and warpage to expect.

The object of the present invention is to reduce the costs for injection-moulding of polymer plastic products. In particular, it is an object of the present invention to selectively manipulate warpage occurring in and/or stiffness of an injection-moulded polymer plastic product.

This object is solved by the feature combination of independent claims 1 and 13. Preferred or optional features are subject of dependent claims 2 to 12.

A first aspect of the present invention provides for a method for selectively manipulating warpage and/or stiffness of an injection-moulded polymer plastic product having a predetermined shape. According to the invention, the method comprises the steps of: (i) defining a mould having a cavity, the cavity defining the shape of the product; (ii) determining a first position of a first nozzle opening in the mould, the first nozzle opening extending into the cavity of the mould; (iii) simulating a filling process of the mould with a melt of the polymer plastic being injected through the first nozzle opening; (iv) obtaining a simulated image of the shape of the polymer plastic product; (v) determining an area of warpage and/or stiffness of the plastic product, the area of stiffness having a stiffness value below a threshold stiffness value; and (vi) determining a second position of a second nozzle opening in the mould, the second nozzle opening extending into the cavity of the mould and being different to the first nozzle opening. The method according to the invention is characterized in that the second position is determined such that an amount of warpage in the area of warpage is reduced and/or the stiffness value in the area of stiffness is increased above the threshold stiffness value.

According to a preferred embodiment of the invention, the second position is determined such that an orientation of the polymer plastic product within the area of warpage and/or stiffness is changed towards a random orientation.

Preferably, the second position is determined using the simulated image of the shape of the polymer plastic product.

More preferably, in step (v), the area of warpage and/or stiffness is determined using the simulated image of the shape of the polymer plastic product.

It is advantageous, if the method further comprises the step of simulating cooling of the melt of the polymer plastic within the mould between step (iii) and step (iv).

According to another preferred embodiment of the invention, a plurality of areas of warpage and/or stiffness is determined in step (v).

In a preferred embodiment, steps (iii), (iv), (v) and (vi) are repeated until the amount of warpage in all of the plurality of areas of warpage is reduced and/or the stiffness value in all of the plurality of areas of stiffness is increased above the threshold stiffness value.

Preferably, first positions of a plurality of first nozzle openings are determined in step (ii).

More preferably, the melt of the polymer plastic is a melt of a semi-crystalline polymer plastic in step (iii).

Yet more preferably, the melt of the polymer plastic includes glass fibers.

According to yet another preferred embodiment of the invention, the second position is determined such that an orientation of the glass fibers in the polymer plastic product within the area of warpage and/or stiffness is changed towards a random orientation.

Preferably, the method is a computer-implemented method.

A second aspect of the present invention provides for a mould to be used for injection-moulding of a polymer plastic product, wherein the mould has first and second nozzle openings the positions of which are determined according to the previously described method.

The present invention will now be explained in more detail with reference to the appended drawings. The drawings show, by way of example, a preferred embodiment of the invention, which may not be interpreted as limiting the scope of the claims.
- Fig. 1: shows a conventional elongate injection mould with serially aligned injection nozzles and injection conduits;
- Fig. 2: shows the final (simulated) injection-moulded product using the mould of Fig. 1;
- Fig. 3: shows an elongate injection mould according to a preferred embodiment of the invention;
- Fig. 4: shows a comparison of the final injection-moulded products obtained by the conventional mould of Fig. 1 and the mould of Fig. 3;
- Fig. 5: shows the glass fibre orientation in the two final injection-moulded products shown in Fig. 4; and
- Fig. 6: is a graph indicating the stiffness of the two final injection-moulded products shown in Fig. 4.

The present invention is not limited to any particular type of polymer. Nor is the present invention limited to a particular type, size or shape of injection-moulded polymer plastic product.

The present invention is useful in selectively manipulating the amount of warpage and or stiffness of any injection-moulded polymer plastic product. Worthwhile to note is that the present invention is not related to the actual injection moulding process, but rather to a way or method of how warpage and/or stiffness of an injection-moulded polymer plastic product can selectively be manipulated, and to a mould designed in accordance with the findings obtained by this method. The method of the present invention is therefore preferably a computer-implemented simulation method.

Most preferably, the method according to the invention aims at selectively reducing the amount of warpage occuring in certain areas of an injection-moulded plastic product. Alternatively, the method according to the invention aims at selectively increasing the level of stiffness (stiffness value) above a predetermined threshold stiffness value.

Prior to the injection moulding process, a mould has to be designed with which the final polymer plastic product can be manufactured by way of an injection-moulding process. The mould has one or more nozzle openings, in the following referred to as primary or first nozzle openings, through which the polymer melt can be injected into the mould. Depending on the size (volume) and shape (geometry) of the mould, and hence of the product to be manufactured using that mould, the aspect ratio, i.e. the ratio of the length to the width (or height) of the mould 1, the size of and the rate of flow of the polymer melt through the first nozzle opening, the position of the primary nozzle opening(s) has to be determined first. Conventionally, the position of the primary nozzle opening(s) is manually determined or a computer algorithm can be used to preselect a possible area to determine the exact position of the primary nozzle opening(s).

The following is an admittedly simplified example of how to manually determine the position of the first nozzle openings. For example, using a perfectly spherical mould, one would position only one first nozzle opening in the rheological centre of the spherical mould, which would be the centre point of the sphere. For a spheroid, which is a tri-axial ellipsoid, there may be several rheological centre points. For the sake of simplicity, the rheological centre is that point in space to which, in average, every point on the surface of a particular geometry has the same distance. It is the rheological centre point which may be used as an indicator at which position the first nozzle opening should be placed. For more complex geometries, more than one rheological centre point may be used, and hence more than one first nozzle opening may be provided in the mould.

In the context of the present invention, the position of the first or primary nozzle opening(s) may be manually determined, or alternatively by using a computer algorithm.

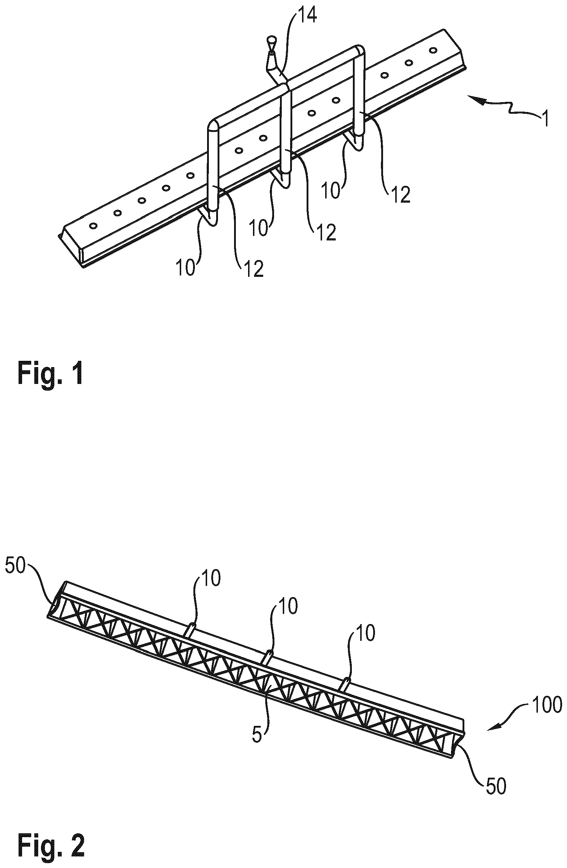

Fig. 1 shows a conventional mould 1 which, for the sake of simplicity, is an elongate cuboid, in this case with a length of 840 mm, a width of 85 mm and a height of 45 mm. The wall thickness of the mould is 3 mm. Fig. 1 shows three first nozzle openings 10. By means of injection conduits 12, the polymer melt is injected through the first nozzle openings 10 into the mould 1. All three injection conduits 12 are charged by one main conduit 14.

The position of the first nozzle openings 10 is determined such that a first primary nozzle opening 10 is arranged in the longitudinal centre of the mould 1, and two additional primary nozzle openings 10 are arranged symmetrically in the longitudinal direction of the mould 1 around the centre nozzle opening 10. The fact that two additional primary nozzle openings 10 are used is mainly due to the aspect ratio of the mould 1, which amounts to nearly 10.

Fig. 2 shows a simulated image of the bottom of the injection-moulded product 100 obtained by using the mould of Fig. 1. The position of the first nozzle openings 10 are also indicated in phantom. As shown in Fig. 2, the injection-moulded product 100 has reinforcing ribs 5 with a thickness in the range of 1.5 to 2.8 mm. The purpose of the reinforcing ribs 5 is irrelevant for the present invention, and will therefore omitted in the further discussion of the invention below. Two areas of warpage 50 can be seen at the left side face and the right side face of the injection-moulded product 100. Ideally, both surfaces on the left side face and the right side face should be planar, and not convexly curved. Worthwhile to note is that the areas 50 on the left side face and the right side face may also be areas of stiffness having a certain stiffness value.

Typically, the amount of shrinkage is indicated in percent meaning that if the mould has a length of 1 m, but the injection-moulded product due to shrinkage has a reduced length of 98 cm, the amount of shrinkage is 2%. Standard values of shrinkage of polyolefine and their filled compounds are within a range of 0.1 to 2%.

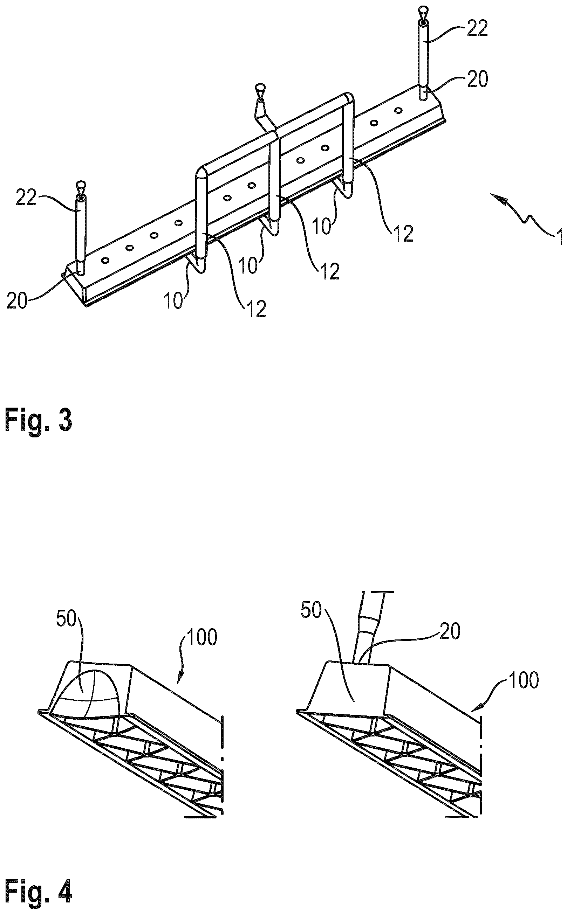

In order to selectively reduce or manipulate the amount of warpage in the two areas of warpage 50, alternatively to selectively manipulate or increase the stiffness level in the areas of stiffness 50, the present invention uses one or more second (secondary) nozzle openings 20 through which polymer melt is injected into the interior of the mould 1. The injection conduits 22 and the second nozzle openings 20 are shown in Fig. 3. The remaining structure of the mould 1, the injection conduits 12 and the primary nozzle openings 10 are the same as in Fig. 1. It is important to note that the second nozzle openings 20 are not necessary for filling the mould 1 with the polymer melt.

The position of the second nozzle openings 20 may be determined manually depending on the size (volume), the geometry, the aspect ratio of the injection-moulded product 100, the size of and the rate of flow through the second nozzle openings 20. Despite the fact that all of these factors may play a role when determining the position of the second nozzle openings 20, the present invention uses a simulation method for finding suitable positions of the second nozzle openings 20 on the mould 1.

Once the position of the first (primary) nozzle openings 10 on a given mould 1 have been determined, the filling process of the mould 1 is simulated. Upon completion of the filling process, preferably the cooling process of the injection-moulded product 100 inside the mould 1 is simulated. In a next step, a simulated image of the shape of the injection-moulded product 100 is obtained. Using that simulated image, an area of warpage and/or stiffness 50, alternatively a plurality of areas of warpage and/or stiffness 50, is/are determined. In case that an area or a plurality of areas of stiffness 50 is determined, the stiffness level in this area(s) is below a threshold stiffness value. In a subsequent step, the position of one or more second (secondary) nozzle openings 20 is determined, preferably using the simulated image of the injection-moulded product 100. The position of the at least one second nozzle opening 20 is selected or determined such that the amount of warpage in the area of warpage 50 is reduced. In addition or alternatively, the position of the at least one second nozzle opening 20 is selected or determined such that the stiffness value in the area of stiffness 50 is increased above the threshold stiffness value. Preferably, the position of the at least one second nozzle opening 20 is within the area of warpage and/or stiffness 50.

In many cases, the polymer melt is mixed with a filler material or glass fibres. The aspect ratio (ratio of the length to the thickness of the glass fibres) typically lies in a range of approximately 20 to 600, with the average thickness of each glass fibre being in a range of 10 to 20 microns, and the length being between 0.5 mm to 15 mm. The glass fibres are normally added to the polymer melt in order to increase the stiffness and rigidity of the injection-moulded product. However, it is the length of the glass fibres and the orientation thereof which has an impact of the amount of warpage (and stiffness) occurring in the areas of warpage (and stiffness) 50. The position of the second nozzle opening(s) 20 may therefore preferably be determined such that an orientation of the glass fibres within the area of warpage (and stiffness) 50 is changed towards a random orientation.

By way of example, Fig. 4 directly compares the amount of warpage in the area of warpage 50 of two injection-moulded products 100. On the left side of Fig. 4, the injection-moulded product 100 was made by using the mould 1 of Fig. 1, i.e. with no secondary nozzle openings 20, and on the right side of Fig. 4, the injection-moulded product 100 was made by using the mould 1 of Fig. 3, i.e. using a secondary nozzle opening 20. In the simulated images of Fig. 4, a reduction of the amount of warpage in the area of warpage 50 can clearly be seen. Similar comparisons can be obtained with respect of the stiffness levels, on the one hand, by using the mould of Fig. 1, and on the other hand, by using the mould of Fig. 3.

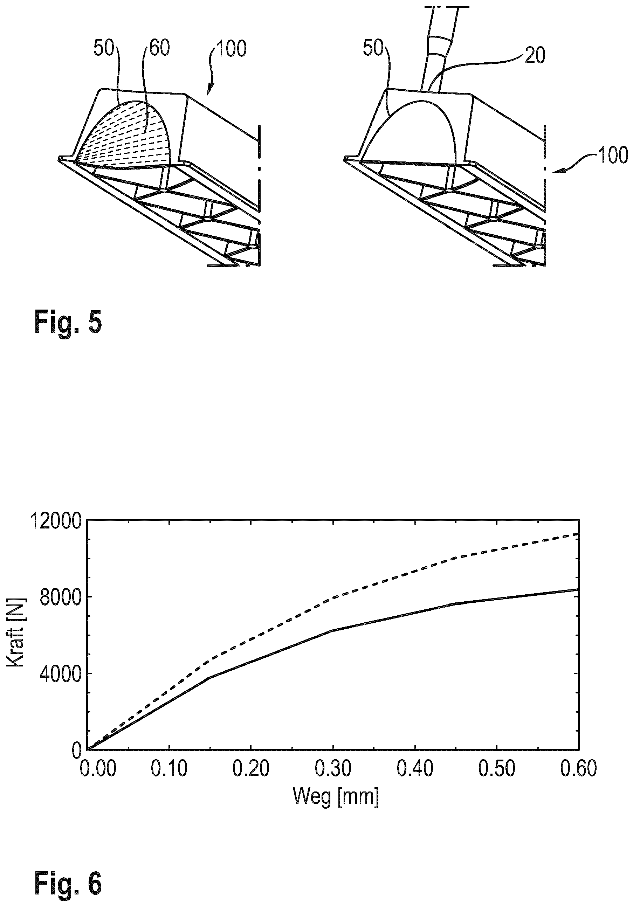

Fig. 5 shows the simulated fibre orientation in the area of warpage 50 of the two injection-moulded products 100 shown in Fig. 4. As can be clearly seen on the right side of Fig. 5, the reduction of warpage in the area of warpage 50 is due to a change of the fibre orientation towards a random orientation (right side), whereas on the left side, the fibre orientation, to some extent, has a clearly recognizable pattern.

Fig. 6 is a graph comparing the stiffness of two injection-moulded products 100. One injection-moulded product 100 has been injection-moulded (in a simulation) using no secondary nozzle openings 20 (lower curve in Fig. 6), and the other injection-moulded product 100 has been injection-moulded (in a simulation) using secondary nozzle openings 20 (upper curve in Fig. 6). As can clearly be seen, there is a significant increase in stiffness of the injection-moulded product 100 when using secondary nozzle openings 20.

The primary objective of providing one or more further secondary nozzle openings 20 in a mould 1 is to keep the amount of warpage throughout the injection-moulded product as uniform as possible, and/or to at least reduce or manipulate the amount of warpage in certain areas of warpage 50. As a change in the amount of warpage concomitantly has an impact on the stiffness value (increase or decrease thereof), the secondary nozzle openings 20 can also be used to selectively manipulate, preferably increase the stiffness level in areas 50 of the injection-moulded product. If the polymer melt does contain a filler material or glass fibres, the position of the secondary nozzle openings 20 is preferably determined such that the glass fibre orientation is randomized in the area of warpage and/or stiffness 50.

## Claims

1. Method for selectively manipulating warpage and/or stiffness of an injection-moulded polymer plastic product (100) having a predetermined shape, the method comprising the steps of:
(a) defining a mould (1) having a cavity, the cavity defining the shape of the product (100);
(b) determining a first position of a first nozzle opening (10) in the mould (1), the first nozzle opening (10) extending into the cavity of the mould (1);
(c) simulating a filling process of the mould (1) with a melt of the polymer plastic being injected through the first nozzle opening (10);
(d) obtaining a simulated image of the shape of the polymer plastic product (100);
(e) determining an area of warpage and/or stiffness (50) of the plastic product (100), the area of stiffness having a stiffness value below a threshold stiffness value;
(f) determining a second position of a second nozzle opening (20) in the mould (1), the second nozzle opening (20) extending into the cavity of the mould (1) and being different to the first nozzle opening (10),
**characterized in that** the second position is determined such that an amount of warpage in the area of warpage (50) is reduced and/or the stiffness value in the area of stiffness is increased above the threshold stiffness value.

2. Method according to claim 1, wherein the second position is determined such that an orientation of the polymer plastic product (100) within the area of warpage and/or stiffness (50) is changed towards a random orientation.

3. Method according to claims 1 or 2, wherein the second position is determined using the simulated image of the shape of the polymer plastic product (100).

4. Method according to any one of the preceding claims, wherein in step (e), the area of warpage and/or stiffness (50) is determined using the simulated image of the shape of the polymer plastic product (100).

5. Method according to any one of the preceding claims, further comprising the step of simulating cooling of the melt of the polymer plastic within the mould (1) between step (c) and step (d).

6. Method according to any one of the preceding claims, wherein in step (e), a plurality of areas of warpage and/or stiffness (50) are determined.

7. Method according to claim 6, wherein steps (c), (d), (e) and (f) are repeated until the amount of warpage in all of the plurality of areas of warpage (50) is reduced and/or the stiffness value in all of the plurality of areas of stiffness is increased above the threshold stiffness value.

8. Method according to any one of the preceding claims, wherein in step (b), first positions of a plurality of first nozzle openings (10) are determined.

9. Method according to any one of the preceding claims, wherein in step (c), the melt of the polymer plastic is a melt of a semi-crystalline polymer plastic.

10. Method according to any one of the preceding claims, wherein the melt of the polymer plastic includes glass fibers.

11. Method according to claim 10, wherein the second position is determined such that an orientation of the glass fibers in the polymer plastic product (100) within the area of warpage and/or stiffness (50) is changed towards a random orientation.

12. Method according to any one of the preceding claims, wherein the method is a computer-implemented method.

13. Mould (1) to be used for injection-moulding of a polymer plastic product, the mould (1) having first (10) and second (20) nozzle openings the positions of which are determined according to the method of any one of claims 1 to 12.
